# EUROPÄISCHE PATENTSCHRIFT

(11) **EP 4 403 716 B1**
(45) Veröffentlichungstag und Bekanntmachung des Hinweises auf die Patenterteilung: **15.10.2025**
(21) Anmeldenummer: 23152507.2
(22) Anmeldetag: 19.01.2023
(51) Int. Cl.: E04C 2/22, E04C 2/24, E04C 2/38, F16L 59/02

(54) **WANDELEMENT ZUR WÄRMEDÄMMUNG EINER INNENWANDFLÄCHE**
WALL ELEMENT FOR HEAT INSULATION OF AN INNER WALL SURFACE
ELÉMENT DE PAROI POUR L'ISOLATION THERMIQUE D'UNE SURFACE DE PAROI INTÉRIEURE

(43) Veröffentlichungstag der Anmeldung: 24.07.2024
(73) Patentinhaber: Maria Leitl, Furniere und Laubschnittholz OG, 3423 Wördern (AT)
(72) Erfinder: BYRTEK, Mieczyslaw Kazimierz, 34-326 Zarzecze (PL)
(74) Vertreter: SONN Patentanwälte GmbH & Co KG

(56) Entgegenhaltungen:
- EP-B1- 1 690 997
- CN-A- 106 013 659
- CN-U- 208 518 195
- CN-U- 211 369 095
- KR-B1- 100 980 142

## Beschreibung

Die Erfindung betrifft ein Wandelement zur Warmedämmung einer Innenwandfläche aufweisend eine elastische Dämmplatte.

Weiters betrifft die Erfindung ein Verfahren zur Wärmedämmung einer Innenwandfläche, wobei das Verfahren mindestens eine Wiederholung der folgenden Schritte umfasst:
- Vorsehen eines Wandelements mit einer elastischen Dämmplatte;
- Anbringen des Wandelements an einer Innenwandfläche,
wobei eine erste Stirnseite der elastischen Dämmplatte bündig an eine zweite Stirnseite einer weiteren elastischen Dämmplatte eines bereits befestigten Wandelements anschließt.

Nicht zuletzt aufgrund stetig steigender Energiekosten und eines stärkeren Bewusstseins der drohenden Gefahren durch den Klimawandel kommt der Erhöhung der Energieeffizienz in allen Bereichen eine immer größere Bedeutung zu. Insbesondere das Heizen gerät in diesem Zusammenhang in den Fokus, da einerseits große Mengen an Energie aufgewendet werden müssen, andererseits aber Sparmaßnahmen mitunter relativ einfach zu implementieren sind. Laut der Österreichischen Energieagentur können sowohl die Heizkosten als auch die damit verbundenen CO₂ Emissionen eines sanierten Gebäudes um 50 Prozent unter denen eines unsanierten Gebäudes liegen. Neben einer Sanierung von beispielsweise Türen und Fenstern, können Wärmeverluste durch Außenwände verringert werden, indem die Außenwände entsprechend thermisch isoliert werden. Typischerweise wird dazu an der Außenwandfläche eine Isolierung angebracht. Die Isolierung muss wetterfest ausgeführt sein oder entsprechend verkleidet sein. Wird ein bereits bestehendes Gebäude nachträglich mit einer solchen Isolierung versehen, können ein verhältnismäßig hoher Aufwand und dadurch verbunden hohe Kosten entstehen.

Alternativ oder zusätzlich zur Anbringung einer Isolierung an der Außenwandfläche kann eine Wärmedämmung an einer Innenwandfläche angebracht werden. Dies ist oftmals einfacher und günstiger als die Außenwandfläche mit einer Isolierung zu versehen. Einerseits da im Innenbereich weniger hohe Anforderungen an die Wärmedämmung in Bezug auf Wetterbeständigkeit bestehen, und andererseits da das Anbringen der Wärmedämmung in einzelnen Stockwerken einfacher ist, als eine gesamte äußere Gebäudeseite mit Isolierung zu versehen, und daher auch von Laien durchgeführt werden kann.

Beispielsweise ist eine Oberflächenabdeckung für Wände aus der US 3 385 743 A bekannt. Die Oberflächenabdeckung weist eine Furnierschicht auf, die von einer Papierschicht gestützt wird. Die Papierschicht weist eine Schicht aus Polyethylen auf, die eine Barriere für Feuchte und Wärme darstellt. Weiters ist eine Klebeschicht vorgesehen, die von einem abnehmbaren Trennblatt geschützt wird. Um die Oberflächenabdeckung an einer Wand anzukleben, wird das Trennblatt entfernt.

Die DE 20 2006 001 433 U1 zeigt einen Dünnschicht-Belag für Fußböden, Wände und Decken mit einer schmiegsamen Unterschicht und einer edlen Oberflächenschicht mit Echtholzfurnier. Es sind eine Trägerschicht und eine Wärmedämmung vorgesehen. Eine ausreichende Stabilität des Dünnschicht-Belags wird durch einen Unterschicht-Aufbau gewährleistet.

Die CN 2016 49 320 U offenbart eine dekorative Verbundplatte zur Wärmedämmung. Die Verbundplatte weist mehrere Schichten auf, die miteinander verklebt sind. Es sind eine Klebeschicht, eine Isolierung, eine wasserdichte Schicht, eine Glasfaserschicht und ein dekoratives Element vorgesehen.

Nachteilig an den bekannten Belägen ist, dass Fugen zwischen den einzelnen Elementen entstehen, die nicht gänzlich verschlossen sind. Beispielsweise kann Luftfeuchtigkeit in einen Spalt zwischen zwei bündig aneinander stehenden Elementen aus Papier oder Glasfasern eindringen. Es ist somit notwendig, die Fugen in einem separaten Schritt zu verkleben, um eine durchgängige Isolierung zu gewährleisten. Des Weiteren weisen die bekannten Beläge eine geringe oder keine Flexibilität auf, weshalb gebogene Wandabschnitte nicht oder nur schwer mit den bekannten Belägen zu versehen sind.

Aus der CN 208 518 195 U ist ferner eine Wand zur Wärme- und Schalldämmung bekannt. Die Wärmedämm-Schallschutzwand weist einen wärmedämmenden Innenkern, einen Holzrahmen, eine horizontale Holzleiste, eine vertikale Holzleiste, eine longitudinale Holzleiste, ein Verbindungsstück, einen Bolzen, eine Schallwand, und eine Hautplatte auf.

CN 106 013 659 A zeigt eine Wandverkleidung. Die Außenseite der Wandverkleidung ist mit einer hölzernen Basisschicht und einer weichen Umhüllung versehen.

EP 1 690 997 B1 zeigt ein Deckensystem mit austauschbaren Platten. Es wird eine flexible Deckenplatte offenbart, die gefaltet oder gebogen werden kann, während sie in eine Öffnung in einem Trägerrost einer Decke eines Bauwerks eingesetzt wird.

KR 100 980 142 B1 zeigt eine Pufferschicht-Verbindungsstruktur für einen Boden, die unter einer abschließenden Mörtelschicht gebildet wird und so konfiguriert ist, dass sie Bodentrittschall blockiert, während sie eine obere Last trägt.

CN 211 369 095 U offenbart eine Steinwolle-Verbindungsplatte, die eine Vielzahl von Steinwolle-Streifen umfasst, die miteinander verbunden sind. In den Steinwolle-Streifen sind Durchgangslöcher ausgebildet.

Des Weiteren sind selbstklebende flexible Dämmmatten aus Kautschuk allgemeiner Stand der Technik. Aufgrund der hohen Flexibilität der Dämmmatten sind sie vielfältig einsetzbar und können beispielsweise an Wasserleitungen, Heizungssystemen oder auch an Wänden angebracht werden. Durch die niedrige thermische Leitfähigkeit und den hohen Wasserdampfdiffusionswiderstand von Kautschuk können Energieverluste vermieden werden und das Eindringen von Wasserdampf und die Interaktion von Wasserdampf mit dem zu isolierenden Objekt verhindert werden. Aufgrund der Elastizität von Kautschuk ist es möglich, zwei Dämmmatten derart nebeneinander zu verlegen, dass kein Spalt zwischen den beiden Dämmmatten entsteht. Dadurch kann ein separates Verkleben oder Überkleben von Fugen oder Spalten entfallen.

Die hohe Flexibilität der Dämmmatten ist vorteilhaft für die Anbringung an stark gekrümmten Objekten wie Rohrleitungen mit einem verhältnismäßig kleinen Durchmesser, beispielsweise von nur einigen Zentimeter oder Dezimeter. Nachteilig wirkt sich die Flexibilität jedoch auf die Anbringung an Wänden aus, da die Handhabung von größeren Abschnitten einer flexiblen Dämmmatte nicht einfach möglich ist. Um beispielsweise eine Dämmmatte flächig an einer Wand anzubringen, muss aufgrund der Flexibilität im Wesentlichen jeder Punkt der Dämmmatte separat an die Wand gepresst werden. Dementsprechend ist eine Montage an einer Wand mühsam und mitunter nur mithilfe einer Leiter möglich, um auch höher gelegene Abschnitte der Dämmmatte geeignet anbringen zu können. Zudem erschwert die Flexibilität und Biegsamkeit die Handhabung der noch losen Dämmmatte und die Ausrichtung an der Wand.

Es ist daher eine Aufgabe der Erfindung, Nachteile aus dem Stand der Technik zu lindern und ein Wandelement zur Wärmedämmung von Innenwandflächen zu schaffen, das in einfacher Weise an ebenen sowie gekrümmten Innenwandflächen angebracht werden kann.

Gelöst wird die erfindungsgemäße Aufgabe durch ein Wandelement nach Anspruch 1 und ein Verfahren nach Anspruch 13. Bevorzugte Ausführungsformen sind in den abhängigen Ansprüchen angegeben.

Das erfindungsgemäße Wandelement weist zumindest zwei leistenförmige Lamellen auf, wobei die zumindest zwei leistenförmigen Lamellen voneinander beabstandet und parallel zueinander an einer Vorderseite der elastischen Dämmplatte angeordnet sind, so dass die elastische Dämmplatte von den leistenförmigen Lamellen mechanisch stabilisiert wird, wobei die leistenförmigen Lamellen einen Holzwerkstoff aufweisen.

Bei dem erfindungsgemäßen Verfahren zur Wärmedämmung einer Innenwandfläche weist das Wandelement zumindest zwei leistenförmigen Lamellen auf, wobei die zumindest zwei leistenförmigen Lamellen voneinander beabstandet und parallel zueinander an einer Vorderseite der elastischen Dämmplatte angeordnet sind, um die elastische Dämmplatte während des Anbringens mechanisch zu stabilisieren. Im Verfahren zur Wärmedämmung der Innenwandfläche ist an einer Rückseite der elastischen Dämmplatte eine Klebefläche vorgesehen, wobei die Rückseite eine der Vorderseite abgewandte Seite der elastischen Dämmplatte ist, wobei die Klebefläche mit einer Schutzfolie abgedeckt ist, wobei das Anbringen des Wandelements ein Ankleben des Wandelements mittels der Klebefläche umfasst, wobei das Verfahren weiters den folgenden Schritt vor dem Anbringen des Wandelements aufweist:
- Abziehen der Schutzfolie von der Klebefläche.

Im Vergleich zum manuellen Aufbringen eines Klebstoffes ist das Abziehen der Schutzfolie deutlich einfacher. Somit wird insgesamt ein einfaches Verfahren zur Wärmedämmung einer Innenwandfläche ermöglicht.

Das Wandelement kann zur Wärmedämmung einer Innenwandfläche verwendet werden. Die Innenwandfläche kann beispielsweise eine Wandfläche im Inneren eines Gebäudes sein. Die Innenwandfläche kann Teil einer Außenwand sein, nämlich die ins Innere des Gebäudes gerichtete Seite der Außenwand. Die Innenwandfläche (oder kurz Wandfläche) kann auch Teil einer Wand sein, die zwei Räume oder zwei Wohneinheiten innerhalb eines Gebäudes voneinander trennt. Um eine Innenwandfläche mit Wärmedämmung zu versehen, kann mindestens ein Wandelement an der Innenwandfläche angebracht werden. Typischerweise ist es notwendig, mehrere Wandelemente nebeneinander anzubringen, um eine gesamte Innenwandfläche zu isolieren. Die Anbringung mehrerer kleinerer Wandelemente ist einfacher als die Anbringung eines einzelnen großen Wandelements.

Die elastische Dämmplatte weist einen Dämmstoff, wie beispielsweise Kautschuk oder Polyurethanschaum auf. Die elastische Dämmplatte kann als Mehrschichtaufbau ausgeführt sein. Beispielsweise kann die elastische Dämmplatte Schichten aus Kautschuk und Alufolie aufweisen. Im Folgenden werden die Begriffe "elastische Dämmplatte" und "Dämmplatte" synonym verwendet. Der Begriff "Dämmplatte" bezieht sich demnach auf die "elastische Dämmplatte" und vice versa. Um die Dämmplatte während der Montage des Wandelements mechanisch zu stabilisieren, weist das Wandelement zumindest zwei leistenförmige Lamellen auf. Die zumindest zwei leistenförmigen Lamellen sind voneinander beabstandet und parallel zueinander an einer Vorderseite der elastischen Dämmplatte angeordnet. Beispielsweise sind die leistenförmigen Lamellen auf die Vorderseite der elastischen Dämmschicht geklebt. Die leistenförmigen Lamellen können beispielsweise Stäbe mit einem im Wesentlichen rechteckigen, insbesondere quadratischen, Querschnitt sein. Die leistenförmigen Lamellen weisen einen Holzwerkstoff auf. Im Folgenden werden die Begriffe "leistenförmige Lamelle" und "Lamelle" synonym verwendet. Der Begriff "Lamelle" bezieht sich demnach auf die "leistenförmige Lamelle" und vice versa.

Die elastische Dämmplatte ist auch flexibel, und kann daher auch auf gekrümmten Wänden einfach angebracht werden. Beispielsweise kann ein Wandelement vorgesehen sein, dass über die gesamte Höhe einer vertikalen und ebenen Innenwandfläche reicht. Beispielsweise kann das Innenwandelement eine Länge von 1,5 Meter bis 3 Meter aufweisen, wobei die Länge des Wandelements beispielsweise der Höhe eines Raumes und somit der Höhe einer Innenwandfläche entsprechen kann. Die Lamellen können parallel zur Längsseite ausgerichtet sein. Wird das Wandelement and der Innenwandfläche angebracht, können die Lamellen vertikal von oben nach unten parallel zur Innenwandfläche ausgerichtet sein. Trotz der Länge des Wandelements und der Höhe der Innenwandfläche, ist es aufgrund der Lamellen beispielsweise nicht notwendig eine Leiter beim Anbringen des Wandelements zu verwenden. Durch die mechanische Stabilisierung aufgrund der Lamellen entlang der Längsrichtung der Lamellen und folglich entlang der Höhe der Innenwandfläche, kann das Wandelement in einfacher Weise an der Innenwandfläche angebracht werden. Beispielsweise kann eine Normalkraft auf einzelne Lamellen ausgeübt werden, die auf die Dämmplatte übertragen wird. Die Lamellen bewirken somit eine Stabilität des Wandelements und vereinfachen die Montage bereits an ebenen Innenwandflächen.

Normal auf die Hauptachse der parallel ausgerichteten Lamellen kann die Dämmplatte und folglich das gesamte Wandelement gebogen werden. Dadurch kann das Wandelement auf gebogenen Innenwandflächen, beispielsweise auf Mantelflächen eines zylindrischen Schachts, besonders einfach angebracht werden. Die Lamellen können dazu parallel zu der Richtung, entlang der die Innenwandfläche keine Krümmung aufweist, im Falle eines zylindrischen Schachts parallel zur Hauptachse des zylindrischen Schachts, ausgerichtet sein. Beispielsweise kann das Wandelement entsprechen gedreht werde, um die Ausrichtung der Lamellen zu gewährleisten. Somit vereinfachen die Lamellen auch die Montage des Wandelements an gekrümmten Innenwandflächen.

Zur Wärmedämmung der Innenwandfläche wird ein Wandelement mit einer elastischen Dämmplatte vorgesehen. Das Wandelement weist zumindest zwei leistenförmigen Lamellen auf, wobei die zumindest zwei leistenförmigen Lamellen voneinander beabstandet und parallel zueinander an einer Vorderseite der elastischen Dämmplatte angeordnet sind, um die elastische Dämmplatte während des Anbringens mechanisch zu stabilisieren. Das Wandelement wird an der Innenwandfläche angebracht. Dabei schließt eine erste Stirnseite der elastischen Dämmplatte bündig an eine zweite Stirnseite einer weiteren elastischen Dämmplatte eines bereits befestigten Wandelements an. Die erste Stirnseite und die zweite Stirnseite stehen quer, insbesondere normal, auf die Vorderseite der elastischen Dämmplatte. Die erste und die zweite Stirnseite sind jeweils Seitenflächen der Dämmplatte. Die Form der Dämmplatte kann beispielsweise im Wesentlichen einem Quader entsprechen. In diesem Fall stehen die Stirnflächen im Wesentlichen normal auf die Vorderseite, wobei die Vorderseite parallel zur Haupterstreckungsebene der Dämmplatte ist. Die Dämmplatte weist eine Rückseite auf, wobei die Rückseite eine der Vorderseite abgewandte Seite der Dämmplatte ist. Die Rückseite kann im Wesentlichen parallel zur Vorderseite sein. Die Form der Dämmplatte kann beispielsweise einem Parallelepiped entsprechen, wobei die Vorderseite und die Rückseite rechteckig sein können. Die Seitenflächen verlaufen entlang des Umfangs der Dämmplatte. Die erste und die zweite Stirnfläche können beispielsweise parallel zu den Hauptachsen der Lamellen sein. Die erste und die zweite Stirnfläche können jeweils einen derartigen Winkel mit der Haupterstreckungsebene der Dämmplatte einschließen, dass die Summe dieser beiden Winkel 180° ergibt, wobei beide Winkel jeweils größer als 0° sind. Liegen zwei Wandelemente aneinander, so liegen dadurch die erste Stirnseite eines Wandelements und die zweite Stirnseite eines benachbarten Wandelements flächig aneinander. Durch das Anbringen mehrerer aneinander anschließender Wandelemente an einer Innenwandfläche, kann eine durchgängige Wärmedämmung der Innenwandfläche erzielt werden.

An einer Rückseite der Dämmplatte ist eine Klebefläche, insbesondere gebildet durch doppelseitiges Klebeband, vorgesehen, wobei die Klebefläche mit einer Schutzfolie abgedeckt ist, wobei die Rückseite eine der Vorderseite abgewandte Seite der Dämmplatte ist, wobei die Klebefläche zur dauerhaften Fixierung des Wandelements an einer Innenwandfläche geeignet ist. Die Klebefläche mit der Schutzfolie kann insgesamt die Montage des Wandelements deutlich vereinfachen, da kein separater Klebstoff auf die Innenwandfläche und/oder das Wandelement während des Anbringens des Wandelements aufgetragen werden muss. Die mechanische Stabilisierung der Dämmplatte aufgrund der Lamellen vereinfacht die Montage des Wandelements auch im Zusammenhang mit der Klebefläche. Einerseits wird durch die mechanische Stabilisierung das Abziehen der Schutzfolie von der Klebefläche auf der elastischen Dämmplatte vereinfacht. Andererseits wird durch die Lamellen ein selbständiges Aufrollen der Dämmplatte verhindert, wodurch auch ein Verkleben von Teilen der Dämmplatte mit anderen Teilen derselben Dämmplatte verhindert wird.

Die Lamellen können beispielsweise einen Körper aus Holzwerkstoff aufweisen. Der Körper kann eine Rückseite aufweisen, wobei die Rückseite der Lamelle auf die Vorderseite der flexiblen Dämmplatte geklebt sein kann. Die Lamelle kann weiters eine der Rückseite gegenüberliegende Frontseite und zwei längsseitige Seitenflächen aufweisen. Auf dem Körper kann eine Dekorschicht angeordnet sein, wobei sich die Dekorschicht zumindest über die Frontseite der Lamelle erstrecken kann. Zusätzlich kann sich die Dekorschicht über mindestens eine längsseitige Seitenfläche der Lamelle erstrecken. Beispielsweise kann die Dekorschicht ein Echtholzfurnier aufweisen. Alternativ kann die Dekorschicht eine bedruckte Kunststofffolie aufweisen.

Beispielsweise kann die Dämmplatte lateral in eine Längsrichtung und lateral in eine Querrichtung erstreckt sein, wobei die Dämmplatte weiter in die Längsrichtung erstreckt ist als in die Querrichtung, wobei die leistenförmigen Lamellen parallel zur Längsrichtung ausgerichtet sind. Das Verhältnis zwischen Länge (in Längsrichtung) und Breite (in Querrichtung) kann größer als 1,5 sein, insbesondere größer oder gleich 2. Die Dämmplatte kann beispielswiese in Längsrichtung eine Länge von 0,4 m (Meter) bis 3 m aufweisen. Beispielsweise kann die Dämmplatte in Querrichtung eine Breite von 0,2 m bis 1 m aufweisen. Die Dicke der Dämmplatte kann beispielsweise in einem Bereich von 0,3 cm bis 2,5 cm liegen. Die Dicke der Dämmplatte betrifft eine Ausdehnung der Dämmplatte normal auf die Haupterstreckungsebene der Dämmplatte. Die Lamellen können parallel zur Längsrichtung ausgerichtet sein, um die Dämmplatte in Richtung der größten Ausdehnung, also in Längsrichtung, zu stabilisieren. Die Lamellen können eine Breite in Querrichtung von beispielsweise 2 cm bis 4 cm aufweisen Die Länge der Lamellen in Längsrichtung kann im Wesentlichen der Länge der Dämmplatte in Längsrichtung entsprechen. Die Lamellen können dementsprechend deutlich länger als breit sein, um so eine mechanische Stabilisierung bevorzugt in Längsrichtung zu gewährleisten und gleichzeitig eine Flexibilität quer dazu zu bewahren. Durch die verhältnismäßig geringe Breite und den Normalabstand der Lamellen zueinander (d.h. zwischen den Lamellen), kann die Dämmplatte und folglich das Wandelement in eine Richtung normal auf die Hauptachse der Lamellen, insbesondere in Querrichtung, gebogen werden. Beispielsweise kann die elastische Dämmplatte wasserdampfdiffusionshemmend, insbesondere wasserdampfdiffusionsdicht, sein. Für die Wärmedämmung ist es günstig, wenn die Wärmeleitfähigkeit des Dämmstoffs möglichst gering ist, um eine Wärmebrücke zwischen dem Innenraum und der Wand möglichst zu vermeiden. Ebenso ist vorteilhaft, wenn möglichst wenig Luftfeuchte zur Innenwandfläche gelangt. Luftfeuchte könnte - wenn sie ein Maß übersteigt, das z.B. durch die Wand diffundieren kann - einerseits an der (kalten) Innenwandfläche kondensieren und so die Wand und/oder das Wandelement beschädigen. Insbesondere könnte kondensierte Luftfeuchte zur Bildung von Schimmel führen. Andererseits kann Luftfeuchte aufgrund der hohen Wärmekapazität von Wassermolekülen und den Diffusionseigenschaften der Wassermoleküle effizient zu einem Temperaturausgleich beitragen. Um gerade diesen Temperaturausgleich zwischen dem Innenraum und der Wand über die Innenwandfläche zu unterbinden, sollte folglich die Wasserdampfdiffussion zumindest gehemmt und im Idealfall unterbunden werden. Dazu kann die Dämmplatte wasserdampfdiffusionshemmend sein, beispielsweise mit einer wasserdampfdiffusionsäquivalenten Luftschichtdicke (s_{d}-Wert) von mindestens 100 m (Meter). Insbesondere kann die elastische Dämmplatte wasserdampdiffusionsdicht sein, beispielsweise mit einer wasserdampfdiffusionsäquivalenten Luftschichtdicke (s_{d}-Wert) von mindestens 1500 m. Beispielsweise weist Chloropren-Kautschuk (auch bekannt als Neopren) einen Wasserdampfdiffusionswiderstand von 10000 auf. Weist die Dämmplatte Chloropren-Kautschuk mit einer Dicke von 2 cm auf, so beträgt die wasserdampfdiffusionsäquivalente Luftschichtdicke 200 m (s_{d}-Wert = 10000*0,02 m = 200 m). Naturkautschuk weist ebenso einen Wasserdampfdiffusionswiderstand von 10000 auf, während beispielsweise Butylkautschuk einen Wasserdampfdiffusionswiderstand von 200000 aufweist.

Die elastische Dämmplatte kann eine derartige Elastizität aufweisen, dass Unebenheiten an einer Innenwandfläche von bis zu 7 mm ausgleichbar sind und, dass mittels der elastischen Dämmplatte und einer weiteren elastischen Dämmplatte eines benachbarten Wandelements eine durchgehende wasserdampfdiffusionshemmende Dämmschicht an der Innenwandfläche gebildet werden kann.

Beim Anbringen des Wandelements kann eine Normalkraft von der ersten Stirnseite der elastischen Dämmplatte lateral auf die zweite Stirnseite der weiteren elastische Dämmplatte des bereits befestigten Wandelements wirken, so dass die elastische Dämmplatte mit der weiteren elastischen Dämmplatte des bereits befestigten benachbarten Wandelements eine durchgehende Dämmschicht an der Innenwandfläche bildet.

Aufgrund der Elastizität wird die Dämmplatte durch die Normalkraft auf die erste Stirnseite komprimiert, d.h. im Bereich der Stirnseite. Ebenso wird die weitere Dämmplatte des bereits befestigten Wandelements aufgrund der Normalkraft auf die zweite Stirnseite komprimiert. Durch diese Kompression und eine entgegengesetzte Expansion bei einem etwaigen Nachlassen der Normalkraft werden letztlich jegliche Fuge und jeglicher Spalt zwischen zwei benachbarten Wandelementen geschlossen und somit vermieden. Zwei benachbarte Dämmplatten bilden daher eine durchgehende Dämmschicht an der Innenwandfläche. Ist die Dämmplatte diffusionshemmend ist auch die durchgehende Dämmschicht wasserdampfdiffusionshemmend. Ist die Dämmplatte wasserdampfdiffusionsdicht ist auch die durchgehende Dämmschicht wasserdampfdiffusionsdicht. D.h. die lokale wasserdampfdiffusionshemmende bzw. wasserdampfdiffusionsdichte Wirkung der durchgehenden Dämmschicht kann an den Kontaktstellen zwischen den Dämmplatten (mindestens) gleich gegeben sein wie im Zentrum einer einzelnen Dämmplatte. Es ist kein Verkleben oder Überkleben von Fugen oder Spalten notwendig.

Weiters kann aufgrund der Elastizität der elastischen Dämmplatte ein schlüssiger Verbund mit der Innenwandfläche erreicht werden, selbst wenn die Innenwandfläche Unebenheiten mit einer typischen Größe von bis zu 7 mm (Millimeter) aufweist. Die elastische Dämmplatte kann derartige Unebenheiten ausgleichen (z.B., indem sich lokale Erhebungen in die Dämmplatte drücken) und dadurch einen Lufteinschluss zwischen Innenwandfläche und Wandelement verhindern.

Die elastische Dämmplatte kann eine mittlere Wärmeleitfähigkeit von maximal 0,04 Watt pro Meter pro Kelvin (W/m K) aufweisen. Dadurch wird eine Wärmeübergang von der Wand an den Innenraum, insbesondere die Raumluft und Gegenstände wie Möbel im Raum, unterdrückt.

Die elastische Dämmplatte kann beispielsweise Kautschuk, insbesondere ein Kautschuk-Elastomer, aufweisen. Sowohl Kautschuk als auch Kautschuk-Elastomere können sowohl eine niedrige Wärmeleitfähigkeit aufweisen, wasserdampfdiffusionshemmende, insbesondere wasserdampdfiffusionsdichte, Schichten bilden und dabei gleichzeitig genügend Elastizität und Flexibilität bieten. Insbesondere kann die elastische Dämmplatte geschlossenporiges Kautschuk-Elastomer aufweisen.

Der Holzwerkstoff kann beispielsweise ein Vollholz oder ein Holzfaserwerkstoff, insbesondere ein mitteldichtes Holzfasermaterial, hochdichtes Holzfasermaterial ("HDF"), ein Holzspanwerkstoff, oder Sperrholz sein. Beispielsweise kann der Körper der Lamelle aus einem Vollholz oder einem Holzfaserwerkstoff, insbesondere einem mitteldichten Holzfasermaterial, hochdichten Holzfasermaterial ("HDF"), einem Holzspanwerkstoff, oder Sperrholz bestehen. Die mechanischen Eigenschaften von Holzwerkstoffen sind besonders gut geeignet, um leistenförmige Lamellen daraus herzustellen, die eine mechanische Stabilität der elastischen Dämmschicht gewährleisten. Durch die Anordnung der Lamellen an der Vorderseite der Dämmschicht, die im bestimmungsgemäßen Gebrauch die sichtbare Seite des Wandelements bildet, sind die Lamellen in einem Innenraum sichtbar und zugänglich. Holzwerkstoffe tragen zu einem angenehmen Raumklima bei und sind beispielsweise in Hinblick auf toxische Eigenschaften bedenkenlos einsetzbar.

Beispielsweise können zumindest drei, insbesondere zumindest zehn, leistenförmige Lamellen vorgesehen sein, wobei die leistenförmigen Lamellen äquidistant an der Vorderseite der elastischen Dämmplatte angeordnet sind. Die Verwendung von mehreren leistenförmigen Lamellen kann die mechanische Stabilität des Wandelements verbessern. Durch die äquidistante Anordnung der Lamellen an der Vorderseite der elastischen Dämmplatte kann einerseits die Homogenität der mechanischen Eigenschaften der elastischen Dämmplatte verbessert werden. Andererseits werden äquidistante sichtbare Lamellen in Räumen als ästhetisch empfunden, somit kann gleichzeitig mit der Wärmedämmung auch ein verbesserter dekorativer Effekt erzielt werden.

Beispielsweise kann der Normalabstand zwischen zwei benachbarten Lamellen mindestens dem 0,1-fachen und höchstens dem 1,5-fachen der Breite einer Lamelle entsprechen. Es ist vorteilhaft, wenn der Normalabstand zwischen zwei benachbarten Lamellen von benachbarten Wandelementen dem Normalabstand zweier benachbarter Lamellen auf demselben Wandelement entspricht. Das Wandelement kann eine erste äußere Lamelle und eine zweite äußere Lamelle aufweisen. Die erste äußere Lamelle ist die Lamelle, die den kleinsten Normalabstand zur ersten Stirnseite aufweist. Die zweite äußere Lamelle ist die Lamelle, die den kleinsten Normalabstand zur zweiten Stirnseite aufweist. Liegen zwei Wandelemente aneinander, liegt die erste Stirnseite eines Wandelements an der zweiten Stirnseite eines weiteren bereits befestigten Wandelements an. Folglich ist die erste äußere Lamelle des Wandelements benachbart zur zweiten äußeren Lamelle des Weiteren bereits befestigen Wandelements. Um den Normalabstand zwischen diesen beiden Lamellen entsprechen dem Normalabstand zweier Lamellen auf einem Wandelement festzulegen, kann der Normalabstand der ersten äußeren Lamelle zur ersten Stirnseite zum Normalabstand der zweiten äußeren Lamelle zur zweiten Stirnseite des (selben) Wandelements dem Normalabstand zwischen zwei benachbarten Wandelementen entsprechen.

Beispielsweise kann ein erster Längsabschnitt einer äußeren leistenförmigen Lamelle über die Vorderseite der elastischen Dämmplatte erstreckt sein und ein zweiter Längsabschnitt der äußeren leistenförmigen Lamelle nicht über die Vorderseite der elastischen Dämmplatte erstreckt sein. Die äußere Lamelle weist eine erste Symmetrieebene auf, die normal auf die Haupterstreckungsebene der Dämmplatte steht und parallel zur Hauptachse der äußeren Lamelle ist. Der erste Längsabschnitt und der zweite Längsabschnitt können beispielsweise in Bezug auf die erste Symmetrieebene auf unterschiedlichen Seiten liegen. Alternativ können der erste und der zweite Längsabschnitt unterschiedliche Breiten, d.h. Ausdehnungen in Querrichtung, aufweisen. Die äußere Lamelle, beispielsweise die erste äußere Lamelle, kann somit teilweise über die Vorderseite der Dämmplatte hinausstehen. Dadurch kann ein Stoß zwischen zwei benachbarten Wandelementen von dem zweiten Längsabschnitt der äußeren Lamelle verdeckt werden, indem der zweite Längsabschnitt der äußeren Lamelle über die Dämmplatte des benachbarten Wandelements steht. Somit ist der Stoß zwischen zwei benachbarten Wandelementen von der äußeren Lamelle verdeckt.

Beispielsweise können die Lamellen eine Querschnittsfläche von mindestens 36 mm², insbesondere genau 165 mm² aufweisen, wobei die Querschnittsfläche normal auf eine Hauptachse der Lamelle steht. Die Querschnittsfläche der Lamellen hat einen maßgeblichen Einfluss auf die mechanischen Eigenschaften der Lamellen und folglich auf die mechanischen Eigenschaften des Wandelements. Eine Querschnittsfläche von mindestens 36 mm², insbesondere genau 165 cm² führt zu mechanischen Eigenschaften des Wandelements, die eine einfache Montage begünstigen. Insbesondere wird durch diese Auswahl genügend Stabilität bewirkt, ohne dabei die Flexibilität des Wandelements stark zu beeinträchtigen. Die Lamellen können beispielsweise einen Querschnitt von 1,8 mm mal 20 mm aufweisen. Die Lamellen können beispielsweise eine Breite in Querrichtung von 20 mm bis 40 mm aufweisen. Die Lamellen können beispielsweise eine Stärke von 1,8 mm bis 12 mm aufweisen.

An der Vorderseite der elastischen Dämmplatte kann ein Schallabsorber, insbesondere eine Filzschicht, angebracht sein, wobei der Schallabsorber zwischen der elastischen Dämmplatte und den leistenförmigen Lamellen angeordnet ist. Der Schallabsorber kann eine dünne flexible Schicht, beispielsweise aus Filz, Wolle, Hanfwolle oder MDF, sein, die einfallenden Schall zumindest dämmt, insbesondere absorbiert. Der Schallabsorber kann beispielsweise über die gesamte Vorderseite der Dämmplatte erstreckt sein. Zusätzlich kann ein Teil der Dämmschicht nicht über die Vorderseite der elastischen Dämmplatte erstreckt sein. Der Teil der Dämmschicht, der nicht über der Vorderseite der elastischen Dämmschicht angeordnet ist, kann beispielsweise dazu verwendet werden, einen Stoß zwischen zwei benachbarten Wandelementen zu überdecken.

Die vorliegende Erfindung wird nachfolgend anhand von in den Zeichnungen dargestellten Ausführungsbeispielen, auf die sie jedoch nicht beschränkt sein soll, und unter Bezugnahme auf die Zeichnungen noch weiter erläutert.
Fig. 1 zeigt eine Frontalansicht eines Wandelements.
Fig. 2 zeigt eine seitliche Ansicht des Wandelements von Fig. 1 von unten (bei in Fig. 1 gezeigten Stellung).

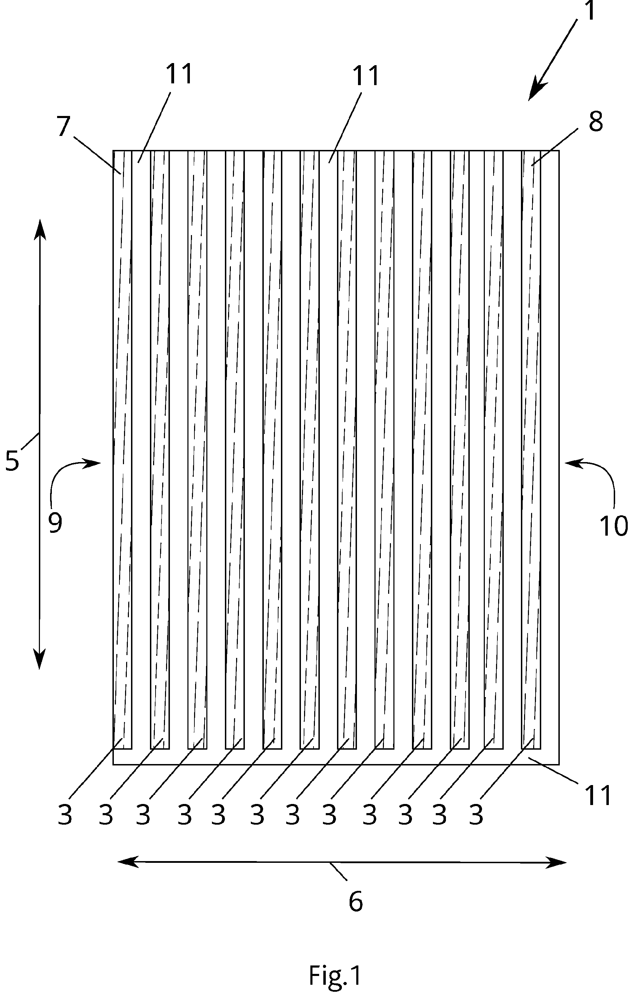

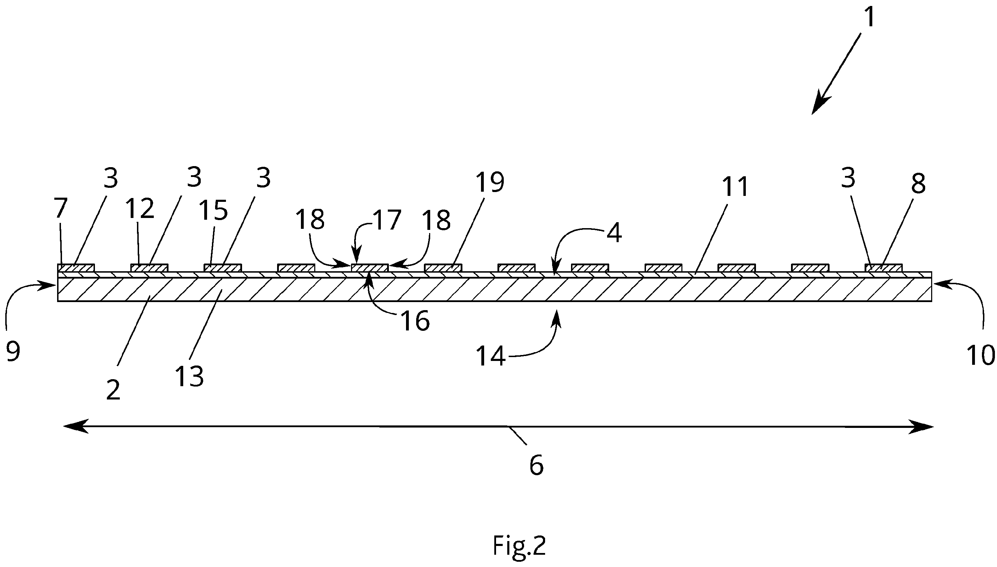

Fig. 1 zeigt ein Wandelement 1 zur Wärmedämmung einer Innenwandfläche (nicht gezeigt) mit einer elastische Dämmplatte 2 (siehe Fig. 2) mit zwölf leistenförmigen Lamellen 3. Die leistenförmigen Lamellen 3 sind voneinander beabstandet und parallel zueinander an einer Vorderseite 4 (siehe Fig. 2) der elastischen Dämmplatte 2 angeordnet, so dass die elastische Dämmplatte 2 von den leistenförmigen Lamellen 3 mechanisch stabilisiert wird. Die Anordnung der leistenförmigen Lamellen 3 ist äquidistant. Der Normalabstand zwischen je zwei benachbarten Lamellen 3 ist daher jeweils gleich. Die Lamellen 3 sind in diesem Ausführungsbeispiel identisch ausgeführt. Alternativ können sich die Lamellen 3 voneinander unterscheiden. Die Dämmplatte 2 erstreckt sich lateral einerseits in eine Längsrichtung 5 und andererseits in eine Querrichtung 6. Die Querrichtung 6 steht normal zur Längsrichtung 5. Sowohl Längsrichtung 5 als auch Querrichtung 6 sind parallel zur Haupterstreckungsebene des Wandelements 1 im dargestellten Zustand, d.h. ohne eine Biegung. Die Dämmplatte 2 erstreckt sich weiter in die Längsrichtung 5 als in die Querrichtung 6. Die leistenförmigen Lamellen 3 sind parallel zur Längsrichtung 5 ausgerichtet. Somit wird die Dämmplatte 2 insbesondere in Längsrichtung 5 stabilisiert, während sie in Querrichtung 6 flexibel bleibt, um einfach an gekrümmten Innenwandflächen angebracht werden zu können. In diesem Ausführungsbeispiel erstrecken sich die leistenförmigen Lamellen 3 in Längsrichtung 5 weniger weit als die Dämmplatte 2. Die Ausdehnung der Dämmplatte 2 beträgt in Längsrichtung 5 2,5 m und in Querrichtung 6 0,6 m. Die Dicke der Dämmplatte beträgt 1,3 cm. Die Ausdehnung der Lamellen 3 beträgt in Längsrichtung 5 247,5 cm und in Querrichtung 6 2,5 cm.

Das Wandelement 1 weist eine erste äußere Lamelle 7 und eine zweite äußere Lamelle 8 auf. Die erste äußere Lamelle 7 ist diejenige der leistenförmigen Lamellen 3, die den kleinsten Normalabstand zu einer ersten Stirnseite 9 aufweist. Die zweite äußere Lamelle 8 ist diejenige, die den kleinsten Normalabstand zu einer zweiten Stirnseite 10 aufweist. Die erste Stirnseite 9 und die zweite Stirnseite 10 sind parallel zur Längsrichtung 5 und stehen quer, in diesem Fall normal, auf die Vorderseite 4. Werden zwei Wandelemente 1 nebeneinander angebracht, liegt die erste Stirnseite 9 eines Wandelements 1 an der zweiten Stirnseite 10 eines weiteren bereits befestigten Wandelements (nicht gezeigt) an. Folglich ist die erste äußere Lamelle 7 des Wandelements 1 benachbart zur zweiten äußeren Lamelle 8 des weiteren bereits befestigen Wandelements. Um den Normalabstand entsprechen dem Normalabstand zweier benachbarter Lamellen 3 auf demselben Wandelement 1 festzulegen, kann die Summe aus dem Normalabstand der ersten äußeren Lamelle 7 zur ersten Stirnseite 9 und dem Normalabstand der zweiten äußeren Lamelle 8 zur zweiten Stirnseite 10 des (selben) Wandelements 1 dem Normalabstand zwischen zwei benachbarten Lamellen 3 eines Wandelements 1 entsprechen. In diesem Fall schließt die erste äußere Lamelle 7 mit der ersten Stirnseite 9 ab. Im dargestellten Ausführungsbeispiel entspricht der Normalabstand der zweiten äußeren Lamelle 8 zur zweiten Stirnseite 10 dem Normalabstand zwischen zwei benachbarten Lamellen 3. Wird ein weiteres identisches Wandelement 1 mit der ersten Stirnseite 9 an die zweite Stirnseite 10 des Wandelements angelegt, sind insgesamt vierundzwanzig leistenförmige Lamellen 3 zu sehen, die jeweils äquidistant angeordnet sind.

Alternativ kann ein erster Längsabschnitt (nicht gekennzeichnet) der ersten äußeren leistenförmigen Lamelle 7 über die Vorderseite 4 der elastischen Dämmplatte 2 erstreckt sein und ein zweiter Längsabschnitt (nicht gekennzeichnet) der ersten äußeren leistenförmigen Lamelle 7 nicht über die Vorderseite 4 der elastischen Dämmplatte 2 erstreckt sein. Auch in diesem Fall kann gewährleistet werden, dass die ersten äußere Lamelle 7 eines Wandelements 1 einen Normalabstand zur zweiten äußeren Lamelle 8 eines weiteren bereits befestigen Wandelements aufweist, der dem Normalabstand zwischen zwei benachbarten Lamellen 3 auf einem Wandelement 1. Dazu kann ein Überstand der ersten äußeren Lamelle 7 mitberücksichtigt werden. Die Lamellen 3 weisen jeweils zwei längsseitige Seitenfläche 18 auf (Details siehe Fig. 2). Wenn der zweite Längsabschnitt nicht über die Vorderseite 4 der elastischen Dämmplatte 2 erstreckt ist, weist der zweite Längsabschnitt eine längsseitige Seitenfläche 18 auf, die ebenfalls nicht über die Vorderseite 4 der Dämmplatte 2 erstreckt ist. Der Überstand ist der Normalabstand der längsseitigen Seitenfläche 18, die nicht über die Vorderseite 4 der Dämmplatte 2 erstreckt ist, zur ersten Stirnseite 9. Um den Normalabstand der ersten äußeren Lamelle 7 zur zweiten äußeren Lamelle 8 eines weiteren bereits befestigen Wandelements entsprechen dem Normalabstand zweier benachbarter Lamellen 3 auf demselben Wandelement 1 festzulegen, kann der Normalabstand der zweiten äußeren Lamelle 8 zur zweiten Stirnseite 10 der Summe aus dem Normalabstand zwischen zwei Lamellen 3 und dem Überstand entsprechen. Wird ein weiteres identisches Wandelement 1 mit der ersten Stirnseite 9 an die zweite Stirnseite 10 des Wandelements angelegt, wären auch in diesem Fall insgesamt vierundzwanzig leistenförmige Lamellen 3 zu sehen, die jeweils äquidistant angeordnet sind. Ein Stoß zwischen zwei benachbarten Wandelementen 1 wäre von der ersten äußeren Lamelle 7 abgedeckt, indem die erste äußere Lamelle 7 über den Stoß erstreckt ist.

Zwischen Dämmplatte 2 und den Lamellen 3 ist ein Schallabsorber 11, in diesem Fall eine Filzschicht, angeordnet (Details siehe Fig. 2).

Fig. 2 zeigt eine seitliche Ansicht des Wandelements 1 aus Fig. 1. Zwischen Dämmplatte 2 und den Lamellen 3 ist der Schallabsorber 11 angeordnet. Der Schallabsorber 11 ist an der Vorderseite 4 der Dämmplatte 2 befestigt. Die Lamellen 3 sind an den Schallabsorber 11 geklebt.

Die leistenförmigen Lamellen 3 weisen einen Holzwerkstoff 12, in diesem Fall Vollholz, auf. Die elastische Dämmplatte 2 weist ein Kautschuk-Elastomer 13 auf und ist wasserdampfdiffusionshemmend mit einem s_{d}-Wert von in etwa 500 m. Die elastische Dämmplatte 2 weist eine derartige Elastizität auf, dass Unebenheiten an einer Innenwandfläche von bis zu 2 mm ausgleichbar sind und, dass mittels der elastischen Dämmplatte 2 und einer weiteren elastischen Dämmplatte (nicht gezeigt) eines benachbarten Wandelements (nicht gezeigt) eine durchgehende wasserdampfdiffusionsdichte Dämmschicht (nicht gezeigt) an der Innenwandfläche gebildet werden kann. Die mittlere Wärmeleitfähigkeit der elastischen Dämmplatte 2 beträgt unter 0,04 Watt pro Meter pro Kelvin (W/m K), in diesem Fall in etwa 0,03 Watt pro Meter pro Kelvin (W/m K).

An einer Rückseite 14 der Dämmplatte 2 ist eine Klebefläche (nicht gezeigt), in diesem Fall gebildet durch doppelseitiges Klebeband, vorgesehen. Die Rückseite 14 ist eine der Vorderseite 4 abgewandte Seite der Dämmplatte 2. Zum Schutz der Klebefläche vor Verunreinigungen wie Staub ist die Klebefläche mit einer Schutzfolie (nicht gezeigt) abgedeckt. Die Klebefläche ist zur dauerhaften Fixierung des Wandelements an einer Innenwandfläche geeignet. Im bestimmungsgemäßen Gebrauch des Wandelements 1 wird die Rückseite 14 des Dämmplatte 2 mittels der Klebefläche an eine Innenwandfläche geklebt und somit an der Innenwandfläche angebracht.

Die leistenförmigen Lamellen 3 weisen eine Querschnittsfläche 19 von mehr als 36 mm², in diesem Fall in etwa 165 mm² auf, wobei die Querschnittsfläche 19 normal auf eine Hauptachse der Lamelle 3 steht. Die Breite der Lamellen 3 in Querrichtung 6 beträgt 2,5 cm und die Höhe, d.h. die Stärke, der Lamellen 3 beträgt 0,66 cm.

Die Lamellen 3 weisen einen Körper 15 aus Holzwerkstoff, in diesem Fall Vollholz, auf. Der Körper 15 weist eine Hinterseite 16 auf, wobei die Hinterseite 16 der Lamelle 3 auf den Schallabsorber 11 geklebt ist. Der Körper 15 der Lamelle 3 weist weiters eine der Hinterseite 16 gegenüberliegende Frontseite 17 auf, sowie zwei längsseitige Seitenflächen 18. Auf dem Körper 15 kann alternativ zur dargestellten Ausführungsform eine Dekorschicht angeordnet sein, wobei sich die Dekorschicht zumindest über die Frontseite 17 der Lamelle erstrecken kann. Zusätzlich kann sich die Dekorschicht über mindestens eine längsseitige Seitenfläche 18 des Körpers 15 der Lamelle 3 erstrecken. Beispielsweise kann die Dekorschicht ein Echtholzfurnier aufweisen.

Zur Wärmedämmung einer Innenwandfläche mit dem Wandelement 1 aus den Figuren 1 und 2 werden die folgenden Schritte zumindest einmal ausgeführt und gegebenenfalls solange wiederholt, bis die die Innenwandfläche gänzlich mit Wandelementen 1 bedeckt ist.
- Vorsehen eines Wandelements 1;
- Abziehen der Schutzfolie von der Klebefläche;
- Anbringen des Wandelements 1 an der Innenwandfläche durch Aufkleben mittels der Klebefläche, wobei die erste Stirnseite 9 der elastischen Dämmplatte 2 bündig an die zweite Stirnseite 10 einer weiteren elastischen Dämmplatte eines bereits befestigten Wandelements anschließt, wobei die erste Stirnseite 9 und die zweite Stirnseite 10 normal auf die Vorderseite 4 der elastischen Dämmplatte 2 stehen. Beim Anbringen des Wandelements 1 wirkt eine Normalkraft von der ersten Stirnseite 9 der elastischen Dämmplatte 2 lateral auf die zweite Stirnseite 10 der weiteren elastische Dämmplatte des bereits befestigten Wandelements, so dass die elastische Dämmplatte 1 mit der weiteren elastischen Dämmplatte des bereits befestigten benachbarten Wandelements eine durchgehende Dämmschicht an der Innenwandfläche bildet.

Eine Innenwandfläche kann abhängig von deren Gesamtfläche innerhalb weniger Stunden mit Wandelementen 1 versehen werden. Zeitaufwendige und komplizierte Arbeitsschritte wie Klebespachteln, Fugen-Spachteln, Ankleben, Überputzen und/oder Anstreichen sind durch die Verwendung des Wandelements 1 nicht notwendig. Die mittels der Wandelemente 1 erzielte Wärmedämmung kann zu Energieeinsparungen von in etwa 20% bis zu 50% führen.

## Patentansprüche

1. Wandelement (1) zur Wärmedämmung einer Innenwandfläche aufweisend eine elastische Dämmplatte (2) und zumindest zwei leistenförmige Lamellen (3), wobei die zumindest zwei leistenförmigen Lamellen (3) voneinander beabstandet und parallel zueinander an einer Vorderseite (4) der elastischen Dämmplatte (2) angeordnet sind, so dass die elastische Dämmplatte (2) von den leistenförmigen Lamellen (3) mechanisch stabilisiert wird,
**dadurch gekennzeichnet, dass** die leistenförmigen Lamellen (3) einen Holzwerkstoff (12) aufweisen, wobei an einer Rückseite (14) der Dämmplatte (2) eine Klebefläche vorgesehen ist, wobei die Klebefläche mit einer Schutzfolie abgedeckt ist, wobei die Rückseite (14) eine der Vorderseite (4) abgewandte Seite der Dämmplatte (2) ist, wobei die Klebefläche zur dauerhaften Fixierung des Wandelements (1) an einer Innenwandfläche geeignet ist.

2. Wandelement (1) nach Anspruch 1, **dadurch gekennzeichnet, dass** sich die Dämmplatte (2) lateral in eine Längsrichtung und lateral in eine Querrichtung erstreckt, wobei die Dämmplatte (2) weiter in die Längsrichtung (5) erstreckt ist als in die Querrichtung (6), wobei die leistenförmigen Lamellen (3) parallel zur Längsrichtung (5) ausgerichtet sind.

3. Wandelement (1) nach einem der Ansprüche 1 oder 2, **dadurch gekennzeichnet, dass** die elastische Dämmplatte (2) wasserdampfdiffusionshemmend, insbesondere wasserdampfdiffusionsdicht, ist.

4. Wandelement (1) nach Anspruch 3, **dadurch gekennzeichnet, dass** die elastische Dämmplatte (2) eine derartige Elastizität aufweist, dass Unebenheiten an einer Innenwandfläche von bis zu 7 mm ausgleichbar sind und, dass mittels der elastischen Dämmplatte (2) und einer weiteren elastischen Dämmplatte eines benachbarten Wandelements eine durchgehende wasserdampfdiffusionshemmende Dämmschicht an der Innenwandfläche gebildet werden kann.

5. Wandelement (1) nach einem der vorhergehenden Ansprüche, **dadurch gekennzeichnet, dass** die elastische Dämmplatte (2) eine mittlere Wärmeleitfähigkeit von maximal 0,04 Watt pro Meter pro Kelvin (W/m K) aufweist.

6. Wandelement (1) nach einem der vorhergehenden Ansprüche, **dadurch gekennzeichnet, dass** die elastische Dämmplatte (2) Kautschuk, insbesondere ein Kautschuk-Elastomer (13), aufweist.

7. Wandelement (1) nach einem der vorhergehenden Ansprüche, **dadurch gekennzeichnet, dass** der Holzwerkstoff (12) ein Vollholz oder ein Holzfaserwerkstoff, insbesondere ein mitteldichtes Holzfasermaterial, hochdichtes Holzfasermaterial ("HDF"), ein Holzspanwerkstoff, oder Sperrholz ist.

8. Wandelement (1) nach einem der vorhergehenden Ansprüche, **dadurch gekennzeichnet, dass** zumindest drei, insbesondere zumindest zehn, leistenförmige Lamellen (3) vorgesehen sind, wobei die leistenförmigen Lamellen (3) äquidistant an der Vorderseite der elastischen Dämmplatte (2) angeordnet sind.

9. Wandelement (1) nach einem der vorhergehenden Ansprüche, **dadurch gekennzeichnet, dass** ein erster Längsabschnitt einer äußeren leistenförmigen Lamelle über die Vorderseite (4) der elastischen Dämmplatte (2) erstreckt ist und ein zweiter Längsabschnitt der äußeren leistenförmigen Lamelle nicht über die Vorderseite der elastischen Dämmplatte (2) erstreckt ist.

10. Wandelement (1) nach einem der vorhergehenden Ansprüche, **dadurch gekennzeichnet, dass** die leistenförmigen Lamellen (3) eine Querschnittsfläche (19) von mindestens 36 mm², insbesondere genau 165 mm² aufweist, wobei die Querschnittsfläche (19) normal auf eine Hauptachse der Lamelle steht.

11. Wandelement (1) nach einem der vorhergehenden Ansprüche, **dadurch gekennzeichnet, dass** die Klebefläche durch doppelseitiges Klebeband gebildet ist.

12. Wandelement (1) nach einem der vorhergehenden Ansprüche, **dadurch gekennzeichnet, dass** an der Vorderseite (4) der elastischen Dämmplatte (2) ein Schallabsorber (11), insbesondere eine Filzschicht, angebracht ist, wobei der Schallabsorber (11) zwischen der elastischen Dämmplatte (2) und den leistenförmigen Lamellen (3) angeordnet ist.

13. Verfahren zur Wärmedämmung einer Innenwandfläche, wobei das Verfahren mindestens eine Wiederholung der folgenden Schritte umfasst:
- Vorsehen eines Wandelements (1) nach einem der Ansprüche 1 bis 12 mit einer elastischen Dämmplatte, wobei das Wandelement (1) zumindest zwei leistenförmigen Lamellen (3) aufweist, wobei die zumindest zwei leistenförmigen Lamellen (3) voneinander beabstandet und parallel zueinander an einer Vorderseite (4) der elastischen Dämmplatte (2) angeordnet sind, um die elastische Dämmplatte (2) während des Anbringens mechanisch zu stabilisieren, wobei an einer Rückseite (14) der elastischen Dämmplatte (2) eine Klebefläche vorgesehen ist, wobei die Rückseite (14) eine der Vorderseite (4) abgewandte Seite der elastischen Dämmplatte (2) ist, wobei die Klebefläche mit einer Schutzfolie abgedeckt ist;
- Abziehen der Schutzfolie von der Klebefläche;
- Anbringen des Wandelements (1) an einer Innenwandfläche, wobei eine erste Stirnseite (9) der elastischen Dämmplatte (2) bündig an eine zweite Stirnseite (10) einer weiteren elastischen Dämmplatte eines bereits befestigten Wandelements anschließt, wobei das Anbringen des Wandelements (1) ein Ankleben des Wandelements (1) mittels der Klebefläche umfasst.

14. Verfahren nach Anspruch 13, **dadurch gekennzeichnet, dass** beim Anbringen des Wandelements (1) eine Normalkraft von der ersten Stirnseite (9) der elastischen Dämmplatte (2) lateral auf die zweite Stirnseite (10) der weiteren elastische Dämmplatte des bereits befestigten Wandelements wirkt, so dass die elastische Dämmplatte (2) mit der weiteren elastischen Dämmplatte des bereits befestigten benachbarten Wandelements (1) eine durchgehende Dämmschicht an der Innenwandfläche bildet.

## Claims

1. A wall element (1) for thermal insulation of an interior wall surface, comprising an elastic insulating panel (2) and at least two slat-shaped lamellas (3), wherein the at least two slat-shaped lamellas (3) being spaced apart from one another and arranged parallel to one another on a front side (4) of the elastic insulating panel (2), so that the elastic insulating panel (2) is mechanically stabilised by the slat-shaped lamellas (3),
**characterised in that** the slat-shaped lamellas (3) comprise engineered wood (12), wherein an adhesive surface is provided on a rear side (14) of the insulating panel (2), wherein the adhesive surface is covered with a protective film, wherein the rear side (14) is a side of the insulating panel (2) facing away from the front side (4), wherein the adhesive surface is suitable for permanently fixing the wall element (1) to an interior wall surface.

2. The wall element (1) according to claim 1, **characterised in that** the insulating panel (2) extends laterally in a longitudinal direction and laterally in a transverse direction, wherein the insulating panel (2) extends further in the longitudinal direction (5) than in the transverse direction (6), wherein the slat-shaped lamellas (3) are aligned parallel to the longitudinal direction (5).

3. The wall element (1) according to any one of claims 1 or 2, **characterised in that** the elastic insulating panel (2) is water vapour diffusion-inhibiting, in particular water vapour diffusion-tight.

4. The wall element (1) according to claim 3, **characterised in that** the elastic insulating panel (2) has such an elasticity that unevennesses on an interior wall surface of up to 7 mm can be compensated for, and that a continuous water vapour diffusion-inhibiting insulating layer (2) can be formed on the interior wall surface by means of the elastic insulating panel and a further elastic insulating panel of an adjacent wall element.

5. The wall element (1) according to any one of the preceding claims, **characterised in that** said elastic insulating panel (2) has an average thermal conductivity of at most 0.04 watts per metre per kelvin (W/m K).

6. The wall element (1) according to any one of the preceding claims, **characterised in that** the elastic insulating panel (2) comprises rubber, in particular a rubber elastomer (13).

7. The wall element (1) according to any one of the preceding claims, **characterised in that** the wood-based material (12) is solid wood or engineered wood, in particular a medium-density wood fibre material, high-density wood fibre material ("HDF"), a wood chip material or plywood.

8. The wall element (1) according to any one of the preceding claims, **characterised in that** at least three, in particular at least ten, slat-shaped lamellas (3) are provided, wherein the slat-shaped lamellas (3) are arranged equidistantly on the front side of the elastic insulating panel.

9. The wall element (1) according to any one of the preceding claims, **characterised in that** a first longitudinal section of an outer slat-shaped lamella extends across the front side (4) of the elastic insulating panel (2), and a second longitudinal section of the outer slat-shaped lamella does not extend across the front side of the elastic insulating panel (2).

10. The wall element (1) according to any one of the preceding claims, **characterised in that** the slat-shaped lamellas (3) have a cross-sectional area (19) of at least 36 mm², in particular exactly 165 mm², wherein the cross-sectional area (19) is normal to a main axis of the lamella.

11. The wall element (1) according to any one of the preceding claims, **characterised in that** the adhesive surface is formed by double-sided adhesive tape.

12. The wall element (1) according to any one of the preceding claims, **characterised in that** a sound absorber (11), in particular a felt layer, is attached to the front side (4) of the elastic insulating panel (2), wherein the sound absorber (11) is arranged between the elastic insulating panel (2) and the slat-shaped lamellas (3).

13. A method for the thermal insulation of an interior wall surface, wherein the method comprises at least one repetition of the following steps:
- providing a wall element (1) according to any of claims 1 to 12 with an elastic insulating panel wherein the wall element (1) has at least two slat-shaped lamellas (3), wherein the at least two slat-shaped lamellas (3) are spaced apart from one another and are arranged parallel to one another on a front side (4) of the elastic insulating panel (2) in order to mechanically stabilise the elastic insulating panel (2) during the attachment, wherein an adhesive surface is provided on the rear side (14) of the elastic insulating plate (2), wherein the rear side (14) is a side of the elastic insulating plate (2) facing away from the front side (4), wherein the adhesive surface is covered with a protective film;
- removing the protective film from the adhesive surface;
- attaching the wall element (1) to an interior wall surface, wherein a first end face (9) of the elastic insulating panel (2) flushes with a second end face (10) of a further elastic insulating panel of an already fastened wall element, wherein attaching the wall element (1) comprises adhering the wall element (1) by means of an adhesive surface.

14. The method according to claim 13, **characterised in that**, when attaching the wall element 1, a normal force from the first end face (9) of the elastic insulating panel (2) acts laterally on the second end face (10) of the further elastic insulating panel of the already fastened wall element, so that the elastic insulating panel (2) forms a continuous insulating layer on the interior wall surface with the further elastic insulating panel of the already fastened adjacent wall element (1).

## Revendications

1. Élément de paroi (1) pour l'isolation thermique d'une surface de paroi intérieure comprenant un panneau isolant élastique (2) et au moins deux lames en forme de baguette (3), les au moins deux lames en forme de baguette (3) étant disposées à distance l'une de l'autre et parallèlement l'une à l'autre sur une face avant (4) du panneau isolant élastique (2), de sorte que le panneau isolant élastique (2) est mécaniquement stabilisée par les lames en forme de baguette (3),
**caractérisé en ce que** les lames en forme de baguette (3) comprennent un matériau dérivé du bois (12), une surface adhésive étant prévue sur une face arrière (14) du panneau isolant (2), la surface adhésive étant recouverte d'un film protecteur, la face arrière (14) étant un côté du panneau isolant (2) opposé à la face avant (4), la surface adhésive étant adaptée à la fixation permanente de l'élément de paroi (1) sur une surface de paroi intérieure.

2. Élément de paroi (1) selon la revendication 1, **caractérisé en ce que** le panneau isolant (2) s'étend latéralement dans une direction longitudinale et latéralement dans une direction transversale, le panneau isolant (2) s'étendant davantage dans la direction longitudinale (5) que dans la direction transversale (6), les lames en forme de baguette (3) étant orientées parallèlement à la direction longitudinale (5).

3. Élément de paroi (1) selon l'une des revendications 1 ou 2, **caractérisé en ce que** le panneau isolant élastique (2) est perméable à la vapeur d'eau de manière limitée, en particulier imperméable à la vapeur d'eau.

4. Élément de paroi (1) selon la revendication 3, **caractérisé en ce que** le panneau isolant élastique (2) présente une élasticité telle que des irrégularités sur une surface de paroi intérieure jusqu'à 7 mm peuvent être compensées et que, au moyen du panneau isolant élastique (2) et d'un autre panneau isolant élastique d'un élément de paroi adjacent, une couche d'isolation continue, , présentant une faible perméabilité à la vapeur d'eau, peut être formée sur la surface de paroi intérieure.

5. Élément de paroi (1) selon l'une des revendications précédentes, **caractérisé en ce que** le panneau isolant élastique (2) présente une conductivité thermique moyenne maximale de 0,04 watt par mètre par kelvin (W/m K).

6. Élément de paroi (1) selon l'une des revendications précédentes, **caractérisé en ce que** le panneau isolant élastique (2) comprend du caoutchouc, en particulier un élastomère de caoutchouc (13).

7. Élément de paroi (1) selon l'une des revendications précédentes, **caractérisé en ce que** le matériau dérivé du bois (12) est un bois massif ou un matériau en fibres de bois, en particulier un matériau en fibres de bois de densité moyenne, un matériau en fibres de bois de haute densité ("HDF"), un matériau à base de copeaux de bois ou un contreplaqué.

8. Élément de paroi (1) selon l'une des revendications précédentes, **caractérisé en ce qu'**au moins trois, en particulier au moins dix, lames en forme de baguette (3) sont prévues, les lames en forme de baguette (3) étant disposées de manière équidistante sur la face avant du panneau isolant élastique (2).

9. Élément de paroi (1) selon l'une des revendications précédentes, **caractérisé en ce qu'**une première section longitudinale d'une lamelle en forme de baguette extérieure s'étend au-delà de la face avant (4) du panneau isolant élastique (2) et une seconde section longitudinale de la lamelle en forme de baguette extérieure ne s'étend pas au-delà de la face avant du panneau isolant élastique (2).

10. Élément de paroi (1) selon l'une des revendications précédentes, **caractérisé en ce que** les lames en forme de baguette (3) présentent une section transversale (19) d'au moins 36 mm², en particulier exactement 165 mm², la section transversale (19) étant perpendiculaire à un axe principal de la lamelle.

11. Élément de paroi (1) selon l'une des revendications précédentes, **caractérisé en ce que** la surface adhésive est formée par un ruban adhésif double face.

12. Élément de paroi (1) selon l'une des revendications précédentes, **caractérisé en ce qu'**un absorbeur acoustique (11), en particulier une couche de feutre, est fixé sur la face avant (4) du panneau isolant élastique (2), l'absorbeur acoustique (11) étant disposé entre le panneau isolant élastique (2) et les lames en forme de baguette (3).

13. Procédé d'isolation thermique d'une surface de paroi intérieure, le procédé comprenant au moins une répétition des étapes suivantes :
- prévoir un élément de paroi (1) selon l'une des revendications 1 à 12 avec un panneau isolant élastique, l'élément de paroi (1) comprenant au moins deux lames en forme de baguette (3), les au moins deux lames en forme de baguette (3) étant disposées à distance l'une de l'autre et parallèlement l'une à l'autre sur une face avant (4) du panneau isolant élastique (2), afin de stabiliser mécaniquement le panneau isolant élastique (2) pendant la fixation, une surface adhésive étant prévue sur une face arrière (14) du panneau isolant élastique (2), la face arrière (14) étant un côté du panneau isolant élastique (2) opposé à la face avant (4), la surface adhésive étant recouverte d'un film protecteur ;
- retirer le film protecteur de la surface adhésive ;
- fixer l'élément de paroi (1) sur une surface de paroi intérieure, une première face frontale (9) du panneau isolant élastique (2) étant affleurante à une seconde face frontale (10) d'un autre panneau isolant élastique d'un élément de paroi déjà fixé, la fixation de l'élément de paroi (1) comprenant un collage de l'élément de paroi (1) au moyen de la surface adhésive.

14. Procédé selon la revendication 13, **caractérisé en ce que** lors de la fixation de l'élément de paroi (1), une force normale agit latéralement de la première face frontale (9) du panneau isolant élastique (2) sur la seconde face frontale (10) de l'autre panneau isolant élastique de l'élément de paroi déjà fixé, de sorte que le panneau isolant élastique (2) forme avec l'autre panneau isolant élastique de l'élément de paroi adjacent déjà fixé (1) une couche d'isolation continue sur la surface de paroi intérieure.
